Europäisches Patentamt

European Patent Office

Office européen des brevets

(11) Numéro de publication: **0 270 391**
**A1**

(12) **DEMANDE DE BREVET EUROPEEN**

(21) Numéro de dépôt: **87402319.5**

(22) Date de dépôt: **16.10.87**

(51) Int. Cl.⁴: **H 04 B 7/26**
**H 04 Q 7/04**

(30) Priorité: **24.10.86 FR 8614805**

(43) Date de publication de la demande:
**08.06.88 Bulletin 88/23**

(84) Etats contractants désignés: **DE GB**

(71) Demandeur: **Mouly, Michel**
**72, rue Jean Bienzen**
**F-92170 Vanves (FR)**

**Thomas, Rémi**
**203 rue La Fayette**
**F-75010 Paris (FR)**

(72) Inventeur: **Mouly, Michel**
**72, rue Jean Bienzen**
**F-92170 Vanves (FR)**

**Thomas, Rémi**
**203 rue La Fayette**
**F-75010 Paris (FR)**

(74) Mandataire: **Mongrédien, André et al**
**c/o BREVATOME 25, rue de Ponthieu**
**F-75008 Paris (FR)**

(54) **Procédé de commande de la retransmission de messages à partir de stations émettrices appartenant à un système cellulaire.**

(57) Les stations émettent des messages vers une station de base fixe par exemple pour demander l'allocation d'un canal dédié pour la communication. Ces messages transitent par un canal de transmission unique partagé par un grand nombre de stations émettrices. Une retransmission de ces messages a lieu lorsque deux stations au moins ont tenté simultanément d'utiliser ce canal commun d'où il est résulté une collision et un blocage des stations en question. La probabilité de retransmission d'un message de demande à travers le canal partagé est fonction de l'état du canal partagé et de la puissance reçue par la station de base en provenance de cette station émettrice.
Application aux réseaux de transmissions radio-mobile.

EP 0 270 391 A1

## Description

## PROCEDE DE COMMANDE DE LA RETRANSMISSION DE MESSAGES A PARTIR DE STATIONS EMETTRICES APPARTENANT A UN SYSTEME CELLULAIRE.

Dans de nombreux systèmes de télécommunications on utilise un canal, dit canal partagé, auquel des stations émettrices-réceptrices ont accès de façon aléatoire. C'est le cas par exemple pour les réseaux radio-mobile de type cellulaire où les stations mobiles d'une même cellule, qui demandent un canal dédié pour leurs communications, passent par un tel canal partagé pour faire parvenir cette demande à un récepteur fixe que l'on appelle station de base.

Quand une station mobile n'a encore procédé à aucune émission, elle est dite active. Dès qu'une station mobile active est en mesure d'émettre une demande, elle l'émet, quel que soit le comportement des autres stations, d'où le caractère aléatoire de l'accès. Plusieurs mobiles pourront donc émettre en même temps leurs demandes. On dit qu'il y a collision et l'ensemble des messages correspondants pourra alors être perdu. Les émetteurs qui viennent de connaître une telle collision sont dit bloqués. Les émetteurs bloqués doivent réémettre leurs messages de demande. Mais on conçoit que n'importe quelle procédure de répétition ne soit pas forcément efficace. En effet, si, par exemple, les émetteurs qui viennent juste d'être bloqués, réémettent immédiatement leur message, il est évident qu'il y aura à nouveau collision. Il y en aura même de plus en plus puisque les émetteurs, qui tenteraient d'émettre pour la première fois durant cette première répétition des messages, entreront eux aussi en collision.

Il est donc nécessaire de choisir une bonne procédure de retransmission des messages de demande.

Ce problème n'est évidemment pas nouveau et il existe depuis 1970 une famille de procédés apportant des solutions convenables. Il s'agit des protocoles d'accès aléatoire du type dit ALOHA. Ces protocoles sont décrits par exemple dans l'article de N. ABRAMSON initulé "The ALOHA System ; another alternative for computer communications" publié dans "Proc. 19 Fall Joint Computer Conference", AFIPS Press, vol.37, pp.281-285.

On parle d'ALOHA synchrone quand les transmissions sont synchronisées avec des intervalles de temps. Les longueurs de ces intervalles sont toutes égales et les transmissions commencent au début d'un intervalle. Un intervalle est suffisant pour qu'un paquet soit transmis et que le mobile ait le temps de recevoir l'acquittement de la station de base. Autrement dit, un intervalle est sufissant pour qu'un paquet soit transmis et que le mobile sache si cette transmission a réussi ou non.

L'idée du système ALOHA est la suivante : durant les intervalles qui suivent une collision, une station émettrice ne réémettra pas à coup sûr mais seulement avec une certaine probabilité f. Plus précisément, la station essaie de réémettre, avec une probabilité f et elle n'essaie pas de réémettre avec une probabilité 1-f, et ceci jusqu'à la réussite de la retransmission. S'agissant de la probabilité f, il existe deux solutions : soit f est fixe, soit f dépend de l'état du canal partagé ; dans ce dernier cas on parle de "système contrôlé".

On démontre qu'un canal ALOHA non contrôlé est instable : le nombre des émetteurs bloqués croît indéfiniment. On démontre également que pour qu'un canal ALOHA contrôlé soit stable, il faut et il suffit que f soit de la forme : $f(k) = a/N(k)$ où $N(k)$ est le nombre d'émetteurs bloqués durant le k-ième intervalle et $f(k)$ la probabilité pour un émetteur bloqué de tenter de retransmettre durant cet intervalle.

Ces propriétés sont décrites dans l'article de G. FAYOLLE, E. GELENBE, J. LABETOULLE intitulé "Stability and optimal control of the packet switching broadcast channel", et publié dans "J. Asso. Comput. Mach.", vol.24, pp. 375-386, juillet 1977.

Le système ALOHA synchrone contrôlé a l'avantage d'assurer la stabilité du canal, mais son rendement est faible. La théorie montre qu'il est au maximum égal à 1/e, soit environ 0,368. Par rendement on entend la moyenne du nombre d'émetteurs autorisés à émettre pour la première fois durant un intervalle, sans que ce flux provoque l'effondrement du système, c'est-à-dire l'augmentation indéfinie du nombre d'émetteurs bloqués. Cette moyenne est aussi la capacité du canal.

Un autre inconvénient des systèmes ALOHA contrôlé est de ne pas tenir compte d'un phénomène dit de capture, qui est le suivant. Dans la réalité, quand deux ou plusieurs stations émettent en même temps, on constate que tous les messages ne sont pas forcément perdus. Il est possible qu'un message -un au plus-passe et parvienne à la station de base. Cet événement dépend du rapport signal sur bruit concernant ce message, les autres messages étant considérés comme du bruit vis-à-vis de celui-ci.

Le système ALOHA contrôlé ne peut pas tenir compte de ce phénomène de capture car il ne fait pas de différence entre les divers émetteurs en ce qui concerne leurs niveaux de puissance. Pourtant, si l'on prend à nouveau l'exemple d'un système radio-mobile, dans une même cellule, la station de base reçoit des signaux qui peuvent être de puissances très différentes, et ce pour des raisons diverses tenant à l'environnement des stations.

La présente invention a justement pour but d'éviter ces inconvénients. A cette fin, elle prévoit un procédé qui permet de prendre en compte le phénomène de capture, ce qui améliore notablement, pour un faible coût supplémentaire, le rendement du canal partagé. Tenir compte de la capture, c'est tenir compte des différences de puissances entre les émetteurs mobiles. Concrètement, dans la présente invention, il s'agit de faire dépendre les retransmission des émetteurs bloqués de leurs niveaux de puissance. Plus précisément, le principe de retransmission selon l'invention consiste à faire dépendre $f(k)$, la probabilité pour un émetteur bloqué de réémettre durant l'intervalle k, de deux données :

- l'activité du canal dans chaque intervalle (succès, insuccès, inutilisation),
- la puissance de l'émission reçue par la station de base, par rapport à une certaine référence.

Ainsi, dans l'invention, les probabilités de réémission varient avec le niveau de puissance. Les mobiles sont donc différenciés.

On peut alors obtenir un rendement supérieur à 1/e, mais surtout pour le même flux d'arrivée, on aura de meilleures conditions de délai, et ceci pour un coût supplémentaire faible. L'invention permet alors de réduire la ressource radio et la quantité d'équipements nécessaire pour gérer un nombre donné d'émetteurs mobiles.

Chaque station émettrice peut être repérée par rapport à une échelle de puissance et cette détermination s'effectue d'après un bilan de liaison que la station mobile effectue avec la station de base de la cellule où elle se trouve. L'établissement de ce bilan ne présente pas de difficulté : c'est une procédure déjà prévue pour d'autres aspects de la communication. La station émettrice effectue cette opération juste avant de commencer à émettre vers la station de base sa première demande.

Par ailleurs, l'activité du canal est une information qu'estimera la station de base et qu'elle retransmettra à l'ensemble des stations appartenant à sa cellule. La station de base est capable de compter le nombre de messages bien reçus et le nombre d'intervalles inutilisés.

Donc, chaque station mobile déterminera sa fréquence de retransmission en fonction de deux informations : bilan de liaison qu'elle aura effectué et activité du canal, qu'elle aura reçu de la station de base.

Le niveau de puissance d'un émetteur peut prendre toutes les valeurs comprises dans un intervalle dont les bornes sont définies par certaines contraintes physiques. On considèrera des plages discrètes de puissance en procédant à une partition de cette plage de puissance en p couches correspondant à p niveaux de puissance différents. La couche 1 correspondra au niveau le plus élevé et la couche p au niveau le moins élevé. Cette partition sera une caractéristique de la cellule et ne variera pas au cours du temps, quelles que soient les évolutions du canal partagé. Le bilan de liaison permet à la station émettrice de déterminer à laquelle de ces couches elle appartient.

Une fois cette détermination effectuée, la station peut être considérée comme ne changeant pas de couche. Il s'agit évidemment d'une approximation puisque la situation d'une station mobile peut évoluer du fait de ses mouvements. Mais cette approximation est tout à fait justifiée par le fait que ces variations sont lentes par rapport à la durée du phénomène considéré, qui est la durée nécessaire à la réussite de la transmission de sa demande.

Concrètement, l'utilisation de cette détermination est la suivante : si un émetteur bloqué appartenant à la couche i cherche à retransmettre durant l'intervalle de rang k, il le fera avec une probabilité $f_i(k)$. Cette probabilité de retransmission dépend donc de la puissance de la station émettrice (couche i) et du temps (intervalle de rang k). Ce dernier élément permet une évolution en fonction de l'état du système à tout instant. L'état du système à un instant donné (durant un intervalle), dépend du nombre $N(k)$ d'émetteurs bloqués à cet instant.

On peut poser alors $f_i(k) = a_i/N(k)$. Pour tout i, $a_i$ est une constante calculée pour optimiser le débit de la couche i et le débit total. Après cette estimation, connaissant les constantes $a_i$, la station de base sera capable de calculer et de diffuser les probablité $f_i$.

Néanmoins cette estimation de $N(k)$ est assez délicate à mettre en oeuvre, et une autre variante est prévue dans l'invention.

Tout d'abord il est nécessaire que la station de base puisse disposer d'une information supplémentaire : l'origine de chaque émission détectée. Après avoir effectué son bilan de liaison, toute station sait dans laquelle des p couches elle se situe. Elle peut alors joindre à chacune de ses émissions un champ d'information pour identifier cette couche. De cette façon, la station de base est capable d'estimer le débit propre à chaque couche. Il s'agit d'une précision supplémentaire par rapport au cas classique où la station de base ne pouvait constater, par intervalle, que l'une des trois situations suivantes inactivité, réussite, échec. Avec cette indication supplémentaire, la station de base pourra constater l'une des $p+2$ situations suivantes :
- inactivité
- réussite dans la couche i $1 \leq i \leq p$
- échec

L'inactivité correspond au cas où la station de base n'entend rien ; une réussite dans la couche i signifie qu'un message a été détecté et qu'il provenait d'un émetteur correspondant à la couche i ; l'échec rend compte de la situation où un bruit est entendu, ce qui signifie qu'un ou plusieurs émetteurs ont tenté d'émettre, mais où il n'y a pas eu de détection correcte.

N composantes seront donc disponibles dans la station de base à l'issue de l'intervalle k, correspondant aux résultats des intervalles allant de $k+1-N$ à k. Ces résultats serviront à l'ajustement de $f_i(k+1)$ en fonction de $f_i(k)$. Pour toute couche i, à la fin de tout intervalle k, les résultats seront diffusés par la station de base.

Un algorithme possible d'ajustement est décrit maintenant.

Disposant des informations par les N composants définis plus haut, on peut utiliser l'estimateur $p(k)$ suivant :

$$p(k) = (1/N) \sum_{i=0}^{N-1} s(k-i) \; ;$$

avec : $\begin{cases} s(j)=1 \text{ si il n'y a pas eu d'activité durant l'intervalle } j \; ; \\ s(j)=0 \text{ dans le cas contraire.} \end{cases}$

p(k) donne donc une indication sur le niveau d'inactivité du canal.

si $p(k) < A$ où A est un paramètre de référence, l'activité est trop forte et on réduira les $f_i(k+1)$ ;

si $p(k) > A$ l'activité est trop faible et on augmente les $f_i(k+1)$.

On peut utiliser également l'estimateur suivant :

$$D_i(k) = (1/N) \sum_{j=1}^{N} X_i(k-j+1) \; ;$$

avec : $\begin{cases} X_i(j)=1 \text{ si la couche i a connu un succès durant l'intervalle } j \; ; \\ X_i(j)=0 \text{ dans le cas contraire.} \end{cases}$

$D_i$ indique donc les succès dans la couche i durant les N intervalles précédents.

Utilisant ces deux indicateurs on peut préciser l'algorithme d'ajustement. On distingue trois cas :   Cas 1 : $p(k) < A-m_i$ et $D_i(k) < K_i-n_i$

Cas 2 : $D_i(k) \geqq K_i-n_i$

Cas 3 : $p(k) \geqq A-m_i$ et $D_i(k) < i-n_i$

où A et ki sont des constantes qui dépendent des caractéristiques d'une cellule donnée. Les coefficients $m_i$, $n_i$ sont des réels strictements positifs.

Selon le cas dans lequel on se trouve on choisit :

$$f_i(k+1) = \begin{cases} \dfrac{f_i(k)}{1+r_i} & \text{dans le cas 1} \\[2mm] f_i(k) & \text{dans le cas 2} \\[2mm] \dfrac{f_i(k)}{1-s_i} & \text{dans le cas 3} \end{cases}$$

où les $r_i$ et $s_i$ sont également des réels strictement positifs.

Pour terminer il faut indiquer que dans un article de L. Georgiadis et Papantoni-Kazakos intitulé "A collision resolution protocol for random access channels with energy detectors" publié dans la revue "IEEE Trans. on Com." vol. Com-30, n°11, Nov.1982, pp.2413-2420, il est décrit un procédé de commande des retransmissions dont le principe est le suivant : quand une collision a lieu durant un intervalle, la station de base interdit aux émetteurs non concernés par cette collision d'émettre jusqu'à la résolution de la collision, c'est-à-dire jusqu'à ce que tous les émetteurs impliqués dans la collision aient pu faire parvenir correctement leurs messages. Le contrôle est basé sur la connaissance du nombre de mobiles impliqués dans une collision. Mais c'est justement la connaissance de cette information qui n'est guère possible dans le cas d'un réseau radio-mobile. Par ailleurs, cet algorithme ne tient pas compte des différences de puissance entre les émetteurs.

Cette idée d'interdire toute transmission avant la résolution de la collision est également mentionnée dans l'article de I. Cidon et M. Sidi, intitulé "The effect on capture on collision-resolution algorithms" publié dans "IEEE Trans. on Com.", vol. com-33, n°4, Avril 1985, pp.317-324. Mais dans un tel cas le système est non-contrôlé et il est tenu compte de la capture les probabilités de réémission dépendent de la puissance, et seulement de la puissance. L'algorithme proposé est donc apparemment proche du système de l'invention, mais il présente deux différences importantes :

- l'absence de contrôle (les probabilités de réémission après une collision ne varient pas en fonction du nombre d'émetteurs bloqués, autrement dit de l'état du système),

- l'interdiction faite aux nouveaux arrivants d'accéder au canal durant la période de résolution d'une collision.

Le système de l'invention est donc le seul qui présente en même temps les caractéristiques suivantes :

- c'est un système à accès aléatoire,

- il n'y a pas de contrôle sur les nouveaux arrivants,

- il y a un contrôle des retransmissions en fonction de l'état du système, et en fonction des différences de puissances entre émetteurs, pour tenir compte de la capture.

Par ailleurs, le système de l'invention est particulièrement adapté à la gestion des retransmissions dans une cellule de réseau radio-mobile.

**Revendications**

Procédé de commande de stations émettrices appartenant à un système de radio-transmission cellulaire comprenant une station de base fixe, les stations émettant des messages vers la station de base fixe par exemple pour demander l'allocation d'un canal dédié pour la communication, ces messages transitant par un canal de transmission unique partagé par un grand nombre de stations émettrices, une retransmission de ces messages ayant lieu lorsque deux stations au moins ont tenté simultanément d'utiliser ce canal commun d'où il est résulté une collision entre ces messages et un bloquage des stations en question, ce procédé consistant en outre à affecter à chaque station émettrice une probabilité de retransmission de son message de demande à travers le canal partagé, cette probabilité étant fonction de l'état du canal partagé, c'est-à-dire du nombre de stations émettrices bloquées, ce procédé étant caractérisé par le fait que la probabilité de retransmission affectée à une station émettrice déterminée dépend en outre de la puissance reçue par la station de base en provenance de cette station émettrice.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | IEEE TRANSACTIONS ON INFORMATION THEORY, vol. IT-31, no. 2, Mars 1985, pages 295-301, IEEE, New York, US; M. SIDI ET AL:: "Splitting protocols in presence of capture" * En entier * --- | 1 | H 04 B   7/26 <br> H 04 Q   7/04 |
| A | IEEE TRANSACTIONS ON INFORMATION THEORY, vol. IT-31, no. 2, mars 1985, pages 124-142, IEEE, New York, US; R.G. GALLAGER: "A perspective on multiaccess channels" * Page 134, paragraphe IV - fin * --- | 1 | |
| A | IEEE TRANSACTIONS ON COMMUNICATIONS, avril 1976, pages 447-448, New York, US; J.J. METZNER: "On improving utilization in ALOHA networks" * En entier * --- | 1 | |
| A | IEEE GLOBAL TELECOMMUNICATIONS CONFERENCE, New Orleans, Louisiana, 2-5 décembre 1985, vol. 2/3, pages 32.4.1-32.4.7, IEEE, US; D.J. GOODMAN et al.: "Local ALOHA radio communications with capture and packet buffers" --- | | **DOMAINES TECHNIQUES RECHERCHES (Int. Cl.4)** <br><br> H 04 B <br> H 04 Q |
| A | IEEE TRANSACTIONS ON COMMUNICATIONS, vol. COM-31, no. 2, février 1983, pages 253-264, IEEE, New York, US; N. SHACHAM: "A protocol for preferred access in packet-switching radio networks" ----- | | |

Le présent rapport a été établi pour toutes les revendications

| Lieu de la recherche | Date d'achèvement de la recherche | Examinateur |
|---|---|---|
| LA HAYE | 25-01-1988 | GERLING J.C.J. |

EPO FORM 1503 03.82 (P0402)